# FASCICULE DE BREVET EUROPEEN

(11) **EP 2 381 143 B1**
(45) Date de publication et mention de la délivrance du brevet: **11.12.2013**
(21) Numéro de dépôt: 11157899.3
(22) Date de dépôt: 11.03.2011
(51) Int. Cl.: F16J 15/02, F16J 15/32

(54) **Joint d'étanchéité, reservoir comprenant un tel joint et utilisation d'un tel joint**
Dichtung, Behälter, der eine solche Dichtung enthält, und Verwendung einer solchen Dichtung
Watertight seal, tank including such a seal and use of said seal

(30) Priorité: 26.04.2010 FR 1001788
(43) Date de publication de la demande: 26.10.2011
(73) Titulaire: Le Joint Francais, 75008 Paris (FR)
(72) Inventeur: Duval-Arnould, Ludovic, 53200 Saint-Fort (FR)
(74) Mandataire: Rataboul, Xavier

(56) Documents cités:
- EP-A1- 0 811 519
- EP-A1- 1 096 182
- DE-B- 1 186 707
- FR-A- 1 446 689
- GB-A- 2 288 438

## Description

La présente invention se rapporte à un joint d'étanchéité annulaire non basculant, à un réservoir muni d'un tel joint et à une utilisation d'un tel joint.

Par exemple, l'industrie automobile doit faire face à de nombreux problèmes techniques impliquant des joints.

Un premier problème est posé par la mise en place de nouvelles normes environnementales qui imposent une forte réduction des taux de fuites, par exemple dans les circuits de fluide, dans les réservoirs, etc. Certaines applications sont particulièrement concernées car la fuite mesurée est essentiellement due à la perméabilité du joint d'étanchéité. Les applications concernées sont, par exemple, le circuit carburant (étanchéité de réservoir, des connexions, etc.), le circuit urée, la climatisation ou toute autre application dans laquelle le fluide peut être en phase gazeuse. Certaines applications sont plus critiques de part la dimension des connecteurs, comme les étanchéités de réservoir ou les joints de tubulure de remplissage de réservoir.

En général, le réservoir comprend un corps de réservoir présentant un col ayant un axe, le col étant prolongé par une région tubulaire, de section inférieure à celle du col et formant une bonde, une flasque annulaire portant la pompe à carburant et la jauge, et un écrou vissé sur le col du réservoir pour maintenir la flasque.

Une face supérieure du col, une face inférieure de la platine, une face cylindrique externe de la bonde et une face cylindrique interne de l'écrou définissant une gorge annulaire pour un joint en serrage axial, c'est-à-dire parallèlement à l'axe de révolution R. En général, le réservoir est en matière plastique.

Dans le cadre de l'amélioration de l'étanchéité des véhicules, plusieurs constructeurs se sont orientés vers la mise en oeuvre de joints toriques en tant que joints de bonde.

Habituellement, le joint torique utilisé présente une section circulaire. Ce type de joint est facile à fabriquer et très peu coûteux.

Cependant, la mise en oeuvre de tels joints conduit à deux types de problèmes, en particulier dans le cas des réservoirs ayant un corps de réservoir en matière plastique par exemple en polyéthylène :
a) les tolérances des pièces en matière plastique conduisent à des joints ayant un diamètre au moins égal à environ 5 mm, et il en résulte un problème d'encombrement pour la gorge du joint, et de déformation du col du réservoir ;
b) il existe un problème de maintien du joint sur le rebord du réservoir avant la mise en place de la bonde.

Certains véhicules sont équipés de joints de bonde qui présentent des lèvres déformables qui assurent une fonction de rattrapage de jeu lorsqu'elles sont déformées. Cependant, de tels joints à lèvres sont complexes en termes de fabrication et de mise en oeuvre, ce qui engendre des coûts difficilement compatibles avec les prix pratiqués dans ce domaine.

Pour palier les inconvénients du joint torique à section circulaire, il a déjà été proposé dans le document EP 0 811 519 de fabriquer des joints à profil dit « en D ».

Ce joint annulaire présente en coupe un profil allongé parallèlement à l'axe de révolution du joint. Plus particulièrement, le joint comprend, en coupe transversale, une forme générale en D définie par une paroi plane formant le dos du D, une paroi convexe en vis-à-vis formant le ventre du D et deux parois latérales reliant la paroi de dos et la paroi de ventre.

L'avantage de ce joint est double. Il permet de réduire la quantité de matière comparativement à un joint torique à section circulaire et, d'autre part, la paroi plane du dos du D empêche le joint de ressortir lors de son installation par un phénomène de roulage (« roll-back ».

Or, il est apparu, en pratique, que lors du serrage et de la compression résultante du joint "en D", celui-ci effectue, dans environ 25% des cas, un basculement plus ou moins prononcé dans la gorge annulaire. Ce basculement est mesurable par la mesure de l'angle fait entre la paroi plane du dos du joint et la face cylindrique externe de la bonde.

Dans la pratique, le serrage comprend une composante essentiellement axiale, c'est-à-dire sensiblement parallèlement à l'axe de révolution R. Compte-tenu des tolérances dimensionnelles parfois importantes, le serrage peut également comprendre une composante radiale non négligeable. Autrement dit, lorsque les deux parties du connecteur sont rapprochées l'une de l'autre axialement, elles peuvent se décaler radialement, c'est-à-dire sensiblement parallèlement à l'axe transversal T.

Par ailleurs, lors de la phase de serrage, le joint subit également une composante radiale non négligeable car l'écrou étant vissé sur le col, il exerce un cisaillement sur le joint, parallèlement à l'axe transversal. La résultante de la compression et du cisaillement peut faire basculer le joint en D dans la gorge de sorte que la partie plane se trouve en regard de la flasque, diminuant ainsi la force de pression du joint et, par conséquent, l'étanchéité de l'ensemble.

Ce basculement peut prendre deux formes : un glissement par cisaillement et un glissement par rotation. Dans les cas extrêmes, le glissement par rotation est si important que le joint bascule complètement après une rotation de 90°. Ces glissements peuvent conduire à une fuite de fluide hors du réservoir.

De nombreuses pièces de ces circuits sont en plastique et, notamment, les pièces destinées à recevoir les joints d'étanchéité. Il n'est donc pas possible d'améliorer l'étanchéité de ces circuits en augmentant la compression des joints sans risquer de déformer ces pièces en plastique ou de les endommager. La conséquence de cette compression serait une perte de l'étanchéité, c'est-à-dire une augmentation de la perméabilité.

La présente invention a pour objet un joint et un réservoir permettant d'améliorer l'étanchéité en évitant, dans quasiment tous les cas, un glissement et/ou un basculement du joint, même mineur, lors du serrage.

A cette fin, l'invention propose un joint permettant un fluage guidé d'une partie de la matière du joint lorsque celui-ci est compressé.

Plus précisément, la présente invention a pour objet un joint annulaire en matériau déformable élastiquement, présentant un axe de révolution et un axe transversal médian, et comprenant, en coupe transversale, une forme générale en D définie par une paroi formant le dos du D, une paroi en vis-à-vis formant le ventre du D, et deux parois latérales reliant la paroi de dos et la paroi de ventre, dans lequel :
- le joint présente une hauteur, entre les parois latérales et en projection sur l'axe de révolution, et un empattement entre les parois de dos et de ventre, en projection sur l'axe transversal, le rapport de l'empattement sur la hauteur étant compris entre 0,7 et 0,85, de préférence de 0,8 ;
- la paroi de dos comprend, à l'état non comprimé, une face concave définissant un creux entre deux sommets, le creux présentant une hauteur comprise entre 50 % et 60 % de la hauteur du joint, et une profondeur comprise entre 4 % et 8 % de l'empattement du joint.

La mise en oeuvre d'un tel joint permet une mise en place optimale du joint et évite qu'il ne bascule pendant le serrage, améliorant ainsi l'étanchéité. Cette stabilité est obtenue en « guidant » la déformation du joint sous l'effet de la compression.

La mise en oeuvre d'un tel joint permet en outre d'économiser de la matière par rapport à un joint en D classique, d'où un coût plus réduit.

Selon des modes de réalisation préférés :
- chaque paroi latérale peut comprendre, à l'état non comprimé, une face plane et sensiblement parallèle à l'axe transversal, présentant une largeur comprise entre 18 % et 35 % de l'empattement du joint ;
- les deux sommets reliant le creux aux faces planes peuvent être constitués par des bords arrondis présentant chacun un rayon de courbure compris entre 20 % et 25 % de la hauteur du joint ;
- la paroi de ventre peut présenter au moins un rayon de courbure ;
- la face concave peut présenter au moins un rayon de courbure ; et/ou
- la paroi de ventre peut être reliée aux parois latérales planes par un raccord franc ou par un raccord rayonné.

L'invention concerne également un réservoir comprenant un corps de réservoir présentant un col ayant un axe de révolution, le col étant prolongé par une région tubulaire, de section inférieure à celle du col, une platine, et un écrou destiné à être vissé sur le col du réservoir, une face supérieure du col, une face inférieure de la platine, une face cylindrique externe de la région tubulaire et une face cylindrique interne de l'écrou définissant une gorge annulaire pour un joint, et un joint selon l'invention.

L'invention concerne également une utilisation dans un réservoir de carburant comprenant un corps de réservoir présentant un col ayant un axe, le col étant prolongé par une région tubulaire, de section inférieure à celle du col, une platine, et un écrou vissé sur le col du réservoir, une face supérieure du col, une face inférieure de la platine, une face cylindrique externe de la région tubulaire et une face cylindrique interne de l'écrou définissant une gorge annulaire pour un joint, d'un joint précité selon l'invention de telle sorte que :
- la paroi formant le dos du D soit portée par la face interne du joint, cette dernière étant en contact avec la face cylindrique externe de la région tubulaire ; et
- les deux parois latérales planes reliant la paroi de dos et la paroi de ventre soient en contact avec, respectivement, la face supérieure du col et la face inférieure de la platine.

De préférence, la paroi formant le ventre du D est disposée dans la gorge, à distance de la face cylindrique interne de l'écrou.

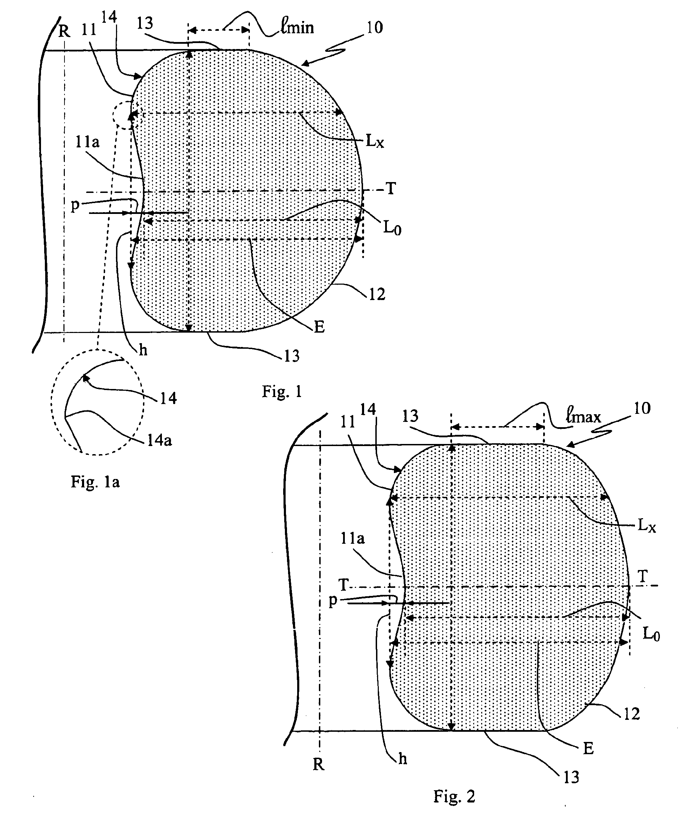

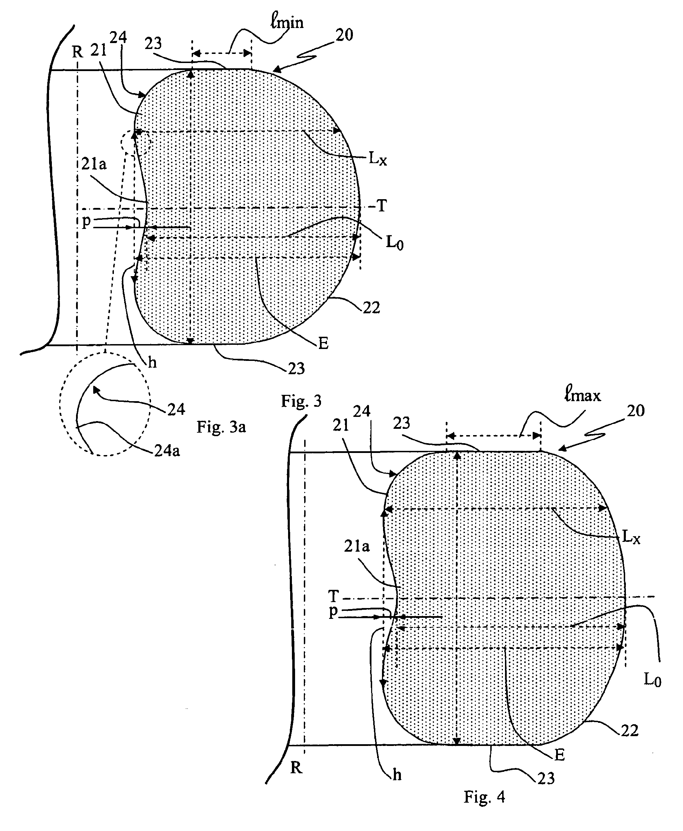

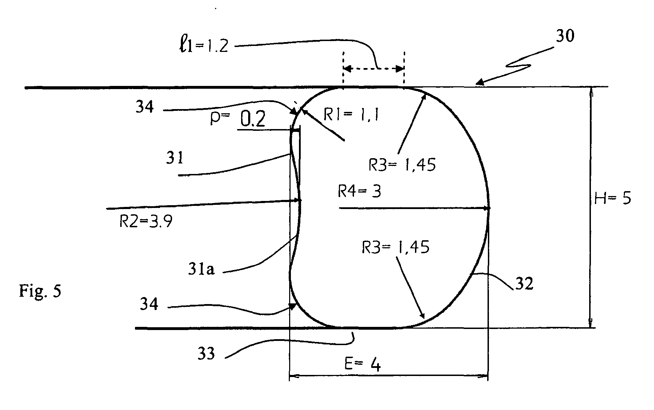

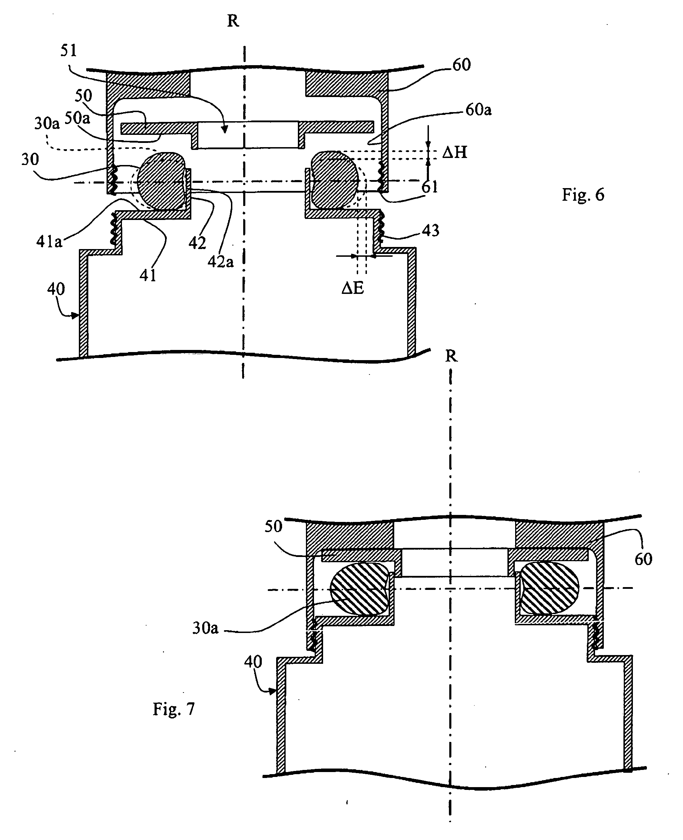

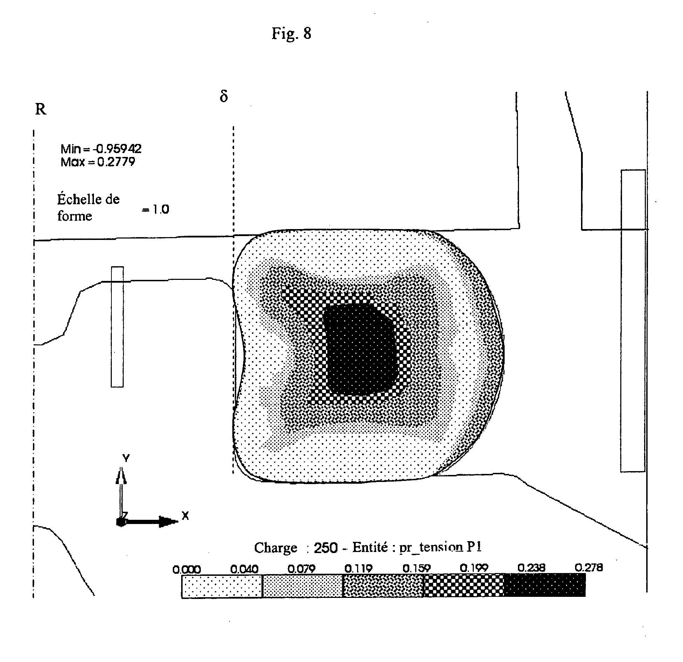

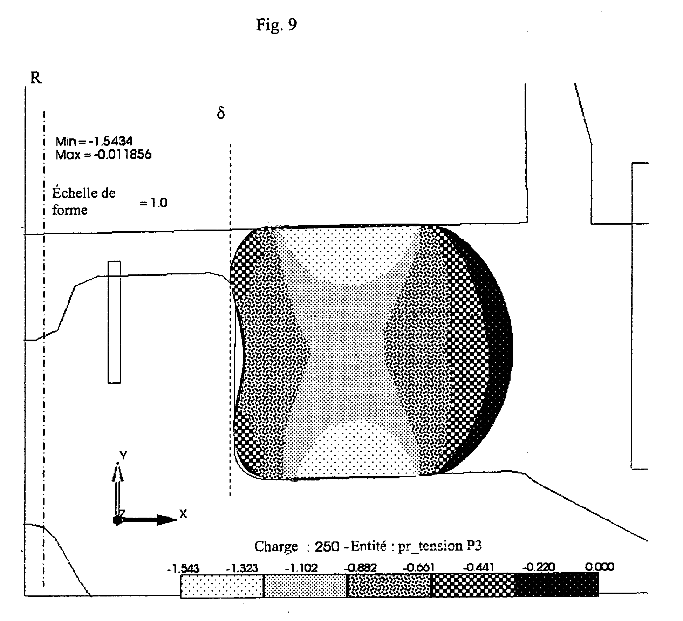

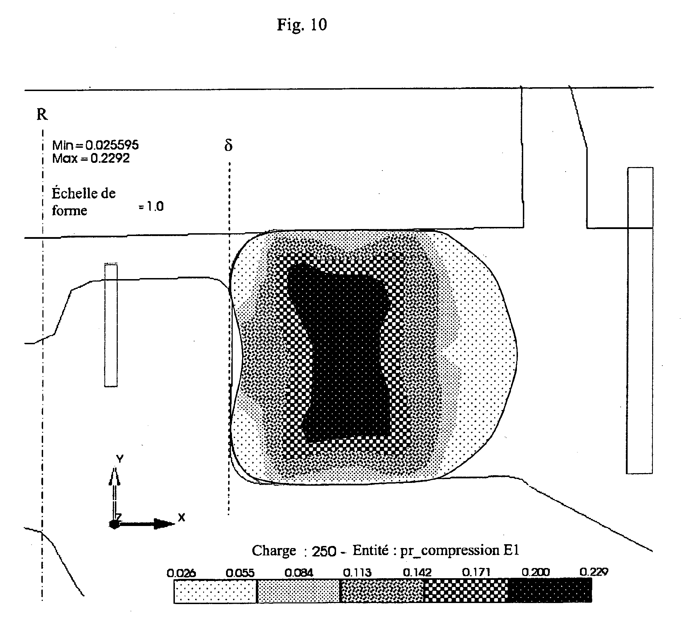

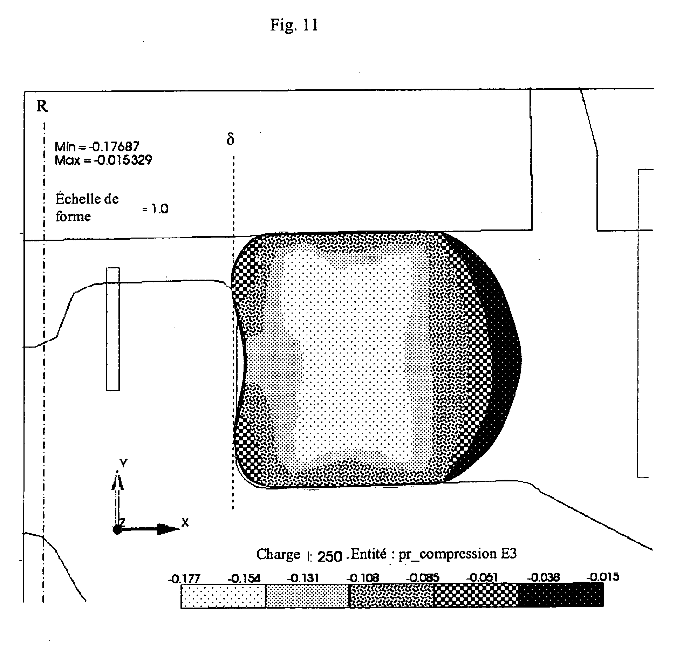

D'autres caractéristiques de l'invention ressortiront de la description détaillée ci-après faite en référence aux dessins annexés qui représentent, respectivement :
- en figures 1 et 2, des vues schématiques d'une coupe transversale partielle d'un premier mode de réalisation d'un joint selon la présente invention ;
- en figure 1a, un vue schématique d'un agrandissement partiel, du joint de la figure 1 ;
- en figure 3 et 4, des vues schématiques d'une coupe transversale partielle d'un deuxième mode de réalisation d'un joint selon la présente invention ;
- en figure 3a, un vue schématique d'un agrandissement partiel, du joint de la figure 3 ;
- en figure 5, une vue schématique en coupe transversale d'un exemple de réalisation d'un joint selon l'invention ;
- en figure 6, une vue schématique en coupe transversale d'un joint selon l'invention en cours de montage dans un réservoir de carburant ;
- en figure 7, une vue schématique en coupe transversale d'un joint selon l'invention après montage et compression dans un réservoir de carburant ;
- en figure 8, une vue schématique d'une coupe transversale partielle de la figure 7, illustrant les contraintes principales en tension subies par le joint ;
- en figure 9, une vue schématique d'une coupe transversale partielle de la figure 7, illustrant les contraintes principales en compression subies par le joint ;
- en figure 10, une vue schématique d'une coupe transversale partielle de la figure 7, illustrant la déformation en tension subie par le joint ; et
- en figure 11, une vue schématique d'une coupe transversale partielle de la figure 7, illustrant la déformation en compression subie par le joint.

Dans la description ci-après, les termes suivants seront définis comme suit :
- Joint annulaire : joint ayant la forme d'un solide de révolution, la révolution pouvant être elliptique, circulaire, polygonale, etc., autour d'un axe de révolution situé au centre du joint ;
- Axe de révolution (R) = axe de révolution du joint ;
- Axe transversal médian (T) = axe perpendiculaire à l'axe de révolution et passant par le milieu du joint. Il sépare donc le joint en deux parties de hauteurs égales;
- Coupe transversale = coupe passant par un axe transversal et l'axe de révolution ;
- Dimension (empattement, largeur, hauteur, profondeur, rayon, etc.) « nominale » : dimension (empattement, largeur, hauteur, profondeur, rayon, etc.) au repos, lorsque le joint n'est pas comprimé.
- L'empattement du joint est égal à la plus grande dimension du joint en projection sur l'axe transversal T.
- Une largeur du joint est égale à la distance, parallèlement à l'axe transversal T, entre un point de la paroi de dos et un point de la paroi de ventre du joint.
- Zone de compression : zone du joint susceptible de se comprimer sous l'effet d'une contrainte. Cette compression peut aboutir à un déplacement, ou « fluage », de la zone de compression ; par opposition, une zone de flexion est susceptible de fléchir sous l'effet d'une contrainte sans se compresser préalablement. Ainsi, au sens de la présente invention, il ne faut pas confondre une lèvre flexible et une zone compressible.

Le joint décrit par la suite est en un matériau déformable élastiquement. De préférence, le matériau du joint peut être choisi parmi les matériaux polymères, en particulier parmi le FPM (caoutchouc fluorocarboné), le HNBR (caoutchouc nitrile hydrogéné), le AEM (copolymère d'éthylène et d'acrylate de méthyle), le ACM (copolymère d'éthylacrylate (ou autre acrylate) et d'un copolymère apportant des sites réactifs pour la vulcanisation), le NBR (caoutchouc butadiène nitrile) et le EPDM (terpolymère d'éthylène, de propylène ou d'un diène).

Un premier mode de réalisation d'un joint 10 selon l'invention est illustré en figure 1. Le joint 10 présente un axe de révolution R et un axe transversal T.

Le joint comprend, en coupe transversale, une forme générale en D. Cette forme est définie par une paroi 11 formant le dos du D, une paroi 12, en vis-à-vis, formant le ventre du D et deux parois latérales 13 reliant la paroi de dos 11 et la paroi de ventre 12.

Dans le mode de réalisation illustré, la paroi 11 formant le dos du D est la paroi interne du joint, c'est à dire, la paroi la plus proche de l'axe de révolution R. La paroi formant le ventre du D est la paroi externe du joint, c'est-à-dire, la paroi la plus éloignée de l'axe de révolution R.

Conformément à l'invention, la forme générale en D est définie par le rapport entre la hauteur nominale H du joint et son empattement nominal E.

La hauteur H du joint est la dimension du joint entre les parois latérales 13 en projection sur l'axe de révolution R. L'empattement E est la dimension du joint entre les parois de dos 11 et de ventre 12 en projection sur l'axe transversal T.

La forme en D selon l'invention est définit par un rapport E sur H compris entre 0,7 et 0,85, et de préférence égale à 0,8. Ce rapport est donné pour des valeurs nominales de l'empattement et de la hauteur du joint, c'est-à-dire lorsque le joint n'est pas comprimé.

Un rapport E/H inférieur à 0,7 donne une forme « en haricot ». Un tel joint bascule presque systématiquement dans la gorge lors d'un serrage axial, parallèle à l'axe de révolution R. De tels joints en haricot ne sont utilisés que pour un serrage radial, perpendiculaire à l'axe de révolution R.

Un rapport E/H supérieur à 0,85 coûte cher à fabriquer puisqu'il nécessite plus de matière. En outre, il ne permet pas d'éliminer les phénomènes de basculement et nécessite une force de serrage importante, incompatible avec des pièces en matière plastique.

Selon une autre caractéristique de l'invention, la paroi de dos 11 du joint comprend une face concave définissant un creux 11 a entre deux sommets 14. A l'état non comprimé du joint, le creux présente une hauteur h comprise entre 50% et 60% de la hauteur nominale H du joint. Par ailleurs, le creux présente une profondeur p comprise entre 4% et 8 % de l'empattement nominale E du joint.

La paroi 11 formant le dos du D comprend deux sommets reliant le creux 11 a aux faces planes 13. De préférence, ces deux sommets 14 sont constitués par des bords arrondis présentant chacun un rayon de courbure compris entre 20% et 25% de la hauteur H du joint. Ainsi, pour un joint de hauteur égale à 5 mm, le rayon de courbure de chacun des sommets 14 est compris entre 1 mm (20% de la Hauteur h du joint) et 1,25 mm (25% de la hauteur H du joint).

Il est bien entendu que, compte-tenu de la hauteur h et de la profondeur p du creux, les sommets du joint disposés de part et d'autre du creux ne fléchissent pas lors du serrage axial, et ne constituent donc pas des lèvres. Grâce à cela, la fabrication reste économique et peut être effectuée avec un moule en deux parties.

Comme le montre la figure 1a, le raccord entre le creux et un sommet peut être un raccord franc 14a, par opposition à un raccord rayonné 24a, illustré en figure 3a. Dans le premier cas d'un raccord franc, illustré aux figures 1 et 2, le raccord entre la surface du creux et la surface bombée du sommet 14 constitue un point anguleux. Au contraire, dans le cas d'un raccord rayonné, illustré aux figures 3 et 4, la surface du creux 21a rejoint la surface du sommet 24 non pas par un point anguleux mais par un arc de cercle 24a (voir figure 3a).

De manière surprenante, la présence du creux limite notablement le pourcentage de joints ayant basculé après serrage. La présence du creux et sa profondeur p permet à la matière constitutive du joint, lors de la compression, de fluer de manière dirigée vers le ventre du D sans que le joint ne bascule.

Avantageusement, chaque paroi latérale 13 du joint comprend une face plane, parallèle à l'axe transversal T, et reliant les sommets de la paroi 11 formant le dos du D à la paroi 12 formant le ventre du D. Ces faces planes présentent chacune, selon l'invention, une largeur nominale ℓ comprise entre 18% et 35% de l'empattement nominal E du joint. Les figures 1 et 3 illustrent un joint dont la largeur ℓₘᵢₙ représente 18% de l'empattement E du joint et les figures 2 et 4 représentent un joint dont la largeur ℓₘₐₓ représente 35% de l'empattement E du joint.

Les surfaces planes sont destinée à entrer en contact avec la face supérieure 41a du col 41 (voir figures 6 et 7) et la face inférieure 50a de la platine 50.

Grâce aux dimensions de ces surfaces planes combinées à la présence du creux 11 a sur la paroi 11 formant le dos du D, quasiment plus aucun basculement du joint selon l'invention n'est constaté lors du serrage.

Le joint selon l'invention présente, avantageusement, une largeur nominale L₀ le long de l'axe transversal médian T supérieure à toute largeur nominale Lₓ du joint, parallèlement à l'axe transversal médian T. Autrement dit, le point de la paroi de dos et le point de la paroi de ventre les plus éloignés l'un de l'autre, parallèlement à l'axe transversal, sont précisément sur l'axe transversal médian T du joint. Ainsi, la largeur nominale maximale du joint se situe au niveau de l'axe transversal T du joint selon l'invention.

Cet agencement permet de réaliser un joint ne basculant pas lors du serrage et très facile à fabriquer, même avec un moule en deux parties. Il est donc beaucoup plus économique que des joints à lèvres, tout en étant beaucoup plus efficace que les joints en D classiques (à dos plan) et les joints toriques à section circulaire.

La figure 5 illustre un exemple de réalisation d'un joint selon l'invention. Ce joint 30 présente une hauteur H de 5 mm et un empattement E de 4 mm. Le joint 30 présente une surface 31, formant le dos du D, constituée par un sommet 34, un creux 31a et un second sommet 34. Le creux 31a présente une profondeur p égale à 0,2mm, soit 5% de l'empattement E.

Chaque sommet 34 est constitué par un arc de cercle de rayon R1 égal à 1,1 mm. Cette valeur représente 22% de la hauteur H du joint. La hauteur h du creux est donc égale à 2,8 mm, c'est-à-dire la hauteur H du joint (5 mm) moins deux fois le rayon R1 (2*1,1 = 2,2). Cette hauteur h représente 56% de la hauteur H du joint.

Le creux 31 a est généré dans l'exemple de la figure 5 par une courbe constituée par un seul arc de cercle. Alternativement, le creux peut être généré par une courbe constituée de plusieurs arcs de cercle. Dans l'exemple illustré, et lorsque la courbe est généré par un seul arc de cercle, la valeur nominale du rayon de l'arc de cercle est, avantageusement, égale à la hauteur H du joint moins le rayon R1 d'un sommet. Sur la figure 5, le rayon R2 est donc égal à 5 - 1,1 mm, soit 3,9 mm. Le centre de l'arc de cercle de rayon R2 est situé sur l'axe transversal médian T.

Les parois latérales planes 33 présentent une largeur ℓ₁ égale à 1,2 mm. Cette largeur représente 30% de l'empattement E.

La paroi 32 formant le ventre du D est constituée, dans l'exemple de la figure 5 par trois arcs de cercle raccordés les uns aux autres. Plus particulièrement, la paroi 32 comprend deux arcs de cercle de rayon R3 égal à 1,45mm raccordés à un arc de cercle de rayon R4 égal à 3 mm.

Alternativement, la paroi 32 pourrait n'être formée que par un seul arc de cercle.

Comme pour le raccord entre le creux avec les sommets, la paroi 32 peut être raccordée aux parois latérales planes 33 par un raccord franc ou par un raccord rayonné. L'utilisation d'un raccord franc permet d'augmenter la largeur des parois latérales planes tout en conservant l'empattement et la largeur du joint.

Les figures 6 et 7 illustrent l'utilisation d'un joint selon l'invention en serrage axial (c'est-à-dire parallèle à l'axe de révolution R) dans un réservoir de carburant.

Le réservoir comprend un corps de réservoir 40 présentant un col 41 d'axe de révolution R et prolongé par une région tubulaire 42, de section inférieure à celle du col. La région tubulaire 42 est agencée par rapport au col pour présenter le même axe de révolution R. Le réservoir comprend également une platine 50 destinée à supporter la pompe de carburant et la jauge. La platine 50 présente un passage 51 pour le carburant. Enfin, le réservoir comprend un écrou 60 destiné à être vissé sur le col 41 du réservoir 40. Comme illustré aux figures 6 et 7, ce vissage est obtenu par coopération d'un filet 43 porté par le réservoir et d'un taraudage 61 porté par l'écrou 60.

Selon l'invention, on utilise un joint tel que caractérisé précédemment dans ce réservoir.

En particulier, cette utilisation est faite de telle sorte que:
- la paroi 31 formant le dos du D soit portée par la face interne du joint, cette dernière étant en contact avec la face cylindrique externe 42a de la région tubulaire 42 ; et
- les deux parois latérales planes 33 reliant la paroi de dos 31 et la paroi de ventre 32 soient en contact avec, respectivement, la face supérieure 41a du col 41 et la face inférieure 50a de la platine 50.

Avantageusement, le réservoir est dimensionné de telle sorte que la paroi formant le ventre du D est disposée dans la gorge, à distance de la face cylindrique interne de l'écrou.

La figure 6 montre le réservoir en cours de montage. Dans cette position, le joint 30 présente ses dimensions nominales. Il est disposé dans une gorge constituée par une face supérieure 41a du col 41, une face inférieure 50a de la platine 50, une face cylindrique externe 42a de la région tubulaire 42 et une face cylindrique interne 60a de l'écrou 60. Le terme externe signifie que la face est tournée à l'opposé de l'axe de révolution R alors que le terme interne signifie que la face est tournée vers l'axe de révolution R.

La figure 7 montre le joint comprimé, une fois que la platine 50a été serrée contre le col et maintenue dans cette position par l'écrou 60. Sur la figure 6, la forme comprimée 30a du joint tel qu'illustré en figure 7 a été représentée en pointillés. Ainsi, entre la position nominale 30 dans laquelle le joint n'est pas comprimé, et la position d'utilisation 30a, dans laquelle le joint est comprimé, il existe une variation de hauteur ΔH et une variation d'empattement ΔE. Ainsi, après avoir été comprimé, le joint présente une hauteur H inférieure à la hauteur H nominale et un empattement E supérieur à l'empattement E nominal.

Les figures 8 à 11 illustrent les contraintes et les déformations subies par le joint lors du serrage. D'une manière générale, on s'aperçoit que grâce à la forme du joint selon l'invention, le serrage axial n'entraîne aucun basculement du joint. Autrement dit, la droite δ passant par les sommets de la paroi formant le dos du D est parfaitement parallèle à l'axe de révolution R. Dans la majorité des cas, les sommets de la paroi formant le dos du D restent en contact avec la face cylindrique externe 42a de la région tubulaire du réservoir. Il peut arriver que les sommets s'écartent de la face cylindrique externe 42a. Néanmoins, même dans ce cas, la droite δ passant par les sommets de la paroi formant le dos du D reste sensiblement parallèle à l'axe de révolution R, grâce à la forme en coupe du joint selon l'invention.

La figure 8 montre, que le coeur du joint subit une contrainte en tension très élevée autrement dit, un volume unitaire de matière situé au coeur du joint est beaucoup plus étiré que le même volume unitaire de matière situé à proximité de l'une des parois latérales planes.

Cette figure montre également que la partie constituant la paroi formant le ventre du D subit également un étirement localisé qui s'explique par la variation d'empattement ΔE lors du serrage axial.

La figure 9 illustre les contraintes principales en compression subies par le joint. Cette figure montre que la partie du matériau situé sous la paroi formant le ventre du D est étirée (il s'agit, dans cette figure, d'une compression négative) puisque la forme du joint selon l'invention permet, lors du serrage axial, une déformation guidée du joint, perpendiculairement à l'axe de révolution R, et vers la paroi du ventre du D.

Les figures 10 et 11 illustrent le pourcentage de déformation du joint, respectivement en tension (figure 10) et en compression (figure 11). Ces figures illustrent la déformation subie par un volume unitaire, en pourcentage, entre l'état initial dans lequel le joint n'est pas comprimé et l'état final dans lequel le joint est comprimé.

En particulier, les figures 10 et 11 montrent que la déformation est principalement localisée au niveau du ventre du D. Ainsi, grâce à la forme du joint selon l'invention, c'est le ventre du D qui « absorbe » toute la déformation de manière localisée guidée, et permet au reste du joint de rester en position optimale, c'est-à-dire, sans aucun basculement et contre leur appui respectif.

## Revendications

1. Joint annulaire (10, 20, 30) en matériau déformable élastiquement, présentant un axe de révolution (R) et un axe transversal médian (T), et comprenant, en coupe transversale, une forme générale en D définie par une paroi (11, 21, 31) formant le dos du D, une paroi (12, 22, 32) en vis-à-vis formant le ventre du D, et deux parois latérales (13, 23, 33) reliant la paroi de dos (11, 21, 31) et la paroi de ventre (12, 22, 32), dans lequel :
- le joint présente une hauteur (H), entre les parois latérales et en projection sur l'axe de révolution (R), et un empattement (E) entre les parois de dos (11, 21, 31) et de ventre (12, 22, 32), en projection sur l'axe transversal (T), le rapport (E/H) de l'empattement (E) sur la hauteur (H) étant compris entre 0,7 et 0,85, de préférence de 0,8, **caractérisé en ce que** :
- la paroi de dos (11, 21, 31) comprend, à l'état non comprimé, une face concave définissant un creux (11a, 21a) entre deux sommets (14), le creux présentant une hauteur (h) comprise entre 50 % et 60 % de la hauteur (H) du joint, et une profondeur (p) comprise entre 4 % et 8 % de l'empattement (E) du joint.

2. Joint annulaire (10, 20, 30) selon la revendication 1, dans lequel chaque paroi latérale (13, 23, 33) comprend, à l'état non comprimé, une face plane et sensiblement parallèle à l'axe transversal (T), présentant une largeur (ℓ, ℓ₁, ℓₘᵢₙ, ℓₘₐₓ) comprise entre 18 % et 35 % de l'empattement (E) du joint.

3. Joint annulaire (10, 20, 30) selon l'une quelconque des revendications 1 ou 2, dans lequel les deux sommets reliant le creux aux faces planes (13, 23, 33) sont constitués par des bords arrondis présentant chacun un rayon de courbure compris entre 20 % et 25 % de la hauteur (H) du joint.

4. Joint annulaire (10, 20, 30) selon l'une quelconque des revendications 1 à 3, dans lequel la paroi de ventre présente au moins un rayon de courbure.

5. Joint d'étanchéité selon l'une quelconque des revendications 1 à 3, dans lequel la face concave présente au moins un rayon de courbure.

6. Joint d'étanchéité selon les revendications 2 et 4, dans lequel la paroi de ventre est reliée aux parois latérales planes (33) par un raccord franc.

7. Joint d'étanchéité selon les revendications 2 et 4, dans lequel la paroi de ventre est reliée aux parois latérales planes (33) par un raccord rayonné.

8. Réservoir comprenant un corps de réservoir (40) présentant un col (41) ayant un axe de révolution (R), le col étant prolongé par une région tubulaire (42), de section inférieure à celle du col, une platine (50), et un écrou (60) destiné à être vissé sur le col (41) du réservoir (40), une face supérieure (41a) du col, une face inférieure (50a) de la platine, une face cylindrique externe (42a) de la région tubulaire et une face cylindrique interne (60a) de l'écrou définissant une gorge annulaire pour un joint, et un joint selon l'une quelconque des revendications 1 à 7.

9. Utilisation dans un réservoir de carburant comprenant un corps de réservoir présentant un col ayant un axe, le col étant prolongé par une région tubulaire, de section inférieure à celle du col, une platine, et un écrou vissé sur le col du réservoir, une face supérieure du col, une face inférieure de la platine, une face cylindrique externe de la région tubulaire et une face cylindrique interne de l'écrou définissant une gorge annulaire pour un joint, d'un joint selon l'une quelconque des revendications 1 à 7, de telle sorte que :
- la paroi (11, 21, 31) formant le dos du D soit portée par la face interne du joint, cette dernière étant en contact avec la face cylindrique externe de la région tubulaire ; et
- les deux parois latérales planes (13, 23, 33) reliant la paroi de dos (11, 21, 31) et la paroi de ventre (12, 22, 32) soient en contact avec, respectivement, la face supérieure du col et la face inférieure de la platine.

10. Utilisation selon la revendication 9, dans lequel la paroi formant le ventre du D est disposée dans la gorge, à distance de la face cylindrique interne de l'écrou.

## Patentansprüche

1. Ringförmige Dichtung (10, 20, 30) aus einem elastisch verformbaren Material, welche eine Rotationsachse (R) und eine mittlere Querachse (T) aufweist und im Querschnitt eine allgemein D-artige Gestalt aufweist, welche definiert ist durch eine Wand (11, 21, 31), welche den Rücken des D bildet, eine Wand (12, 22, 32) gegenüber, welche den Bauch des D bildet, und zwei seitliche Wände (13, 23, 33), welche die Rückenwand (11, 21, 31) und die Bauchwand (12, 22, 32) verbinden, wobei:
- die Dichtung eine Höhe (H), zwischen den seitlichen Wänden und in Projektion auf die Drehachse (R), und einer Spannweite (E) zwischen der Rückenwand (11, 21, 31) und Bauchwand (12, 22, 32), in Projektion auf die Querachse (T), aufweist, wobei das Verhältnis (E/H) des Achsenabstands (E) über der Höhe (H) zwischen 0,7 und 0,85 enthalten, bevorzugt 0,8 ist, **dadurch gekennzeichnet, dass**:
- die Rückenwand (11, 21, 31) im nicht komprimierten Zustand eine konkave Seite umfasst, welche eine Vertiefung (11a, 21a) zwischen zwei Scheiteln (14) aufweist, wobei die Vertiefung eine Höhe (h) aufweist, welche zwischen 50% und 60% der Höhe (H) der Dichtung enthalten ist, und eine Tiefe (p) aufweist, welche zwischen 4% und 8% der Spannweite (E) der Dichtung enthalten ist.

2. Ringförmige Dichtung (10, 20, 30) nach Anspruch 1, wobei jede seitliche Wand (13, 23, 33) im nicht komprimierten Zustand eine ebene und im Wesentlichen zu der transversalen Achse (T) parallele Seite aufweist, welche eine Breite (l, l₁, lₘᵢₙ, lₘₐₓ) aufweist, die zwischen 18% und 35% der Spannweite (E) der Dichtung enthalten ist.

3. Ringförmige Dichtung (10, 20, 30) nach einem der Ansprüche 1 oder 2, wobei die zwei Scheitel, welche die Vertiefung mit den ebenen Seiten (13, 23, 33) verbinden, gebildet sind durch abgerundete Kanten, welche jeweils einen Krümmungsradius aufweisen, der zwischen 20% und 25% der Höhe (H) der Dichtung enthalten ist.

4. Ringförmige Dichtung (10, 20, 30) nach einem der Ansprüche 1-3, wobei die Bauchwand wenigstens einen Krümmungsradius aufweist.

5. Dichtung nach einem der Ansprüche 1-3, wobei die konkave Seite wenigstens einen Krümmungsradius aufweist.

6. Dichtung nach einem der Ansprüche 2 und 4, wobei die Bauchwand mit den zwei ebenen Wänden (33) durch einen bündigen Anschluss verbunden ist.

7. Dichtung nach einem der Ansprüche 2 und 4, wobei die Bauchwand mit den ebenen lateralen Wänden (33) durch einen Profilausschluss verbunden ist.

8. Reservoir, umfassend einen Reservoirkörper (40), welcher einen Kragen (41) mit einer Rotationsachse (R), wobei der Kragen verlängert ist durch einen röhrenartigen Bereich (42) mit geringerem Querschnitt als derjenige des Kragens, eine Platte (50) und eine Mutter (60), welche dazu bestimmt ist auf den Kragen (41) des Reservoirs (40) geschraubt zu werden, aufweist, wobei eine obere Seite (41a) des Kragens, eine untere Seite (50a) der Platte, eine äußere zylindrische Seite (42a) des röhrenartigen Bereichs und eine innere zylindrische Seite (60a) der Mutter eine ringförmige Kehle für eine Dichtung definieren, und eine Dichtung nach einem der Ansprüche 1-7.

9. Verwendung in einem Brennstoffreservoir, welches einen Reservoirkörper, welcher einen Kragen mit einer Achse, wobei der Kragen verlängert ist durch einen röhrenartigen Bereich mit geringerem Querschnitt als derjenige des Kragens, eine Platte und eine Mutter, welche auf den Kragen des Reservoirs geschraubt ist, aufweist, wobei eine obere Seite des Kragens, eine untere Seite der Platte, eine äußere zylindrische Seite des ringförmigen Bereichs und eine innere zylindrische Seite der Mutter eine ringförmige Kehle für eine Dichtung definieren, einer Dichtung nach einem der Ansprüche 1-7, derart, dass:
- die Wand (11, 21, 31), welche den Rücken des D bildet, getragen wird von der inneren Seite der Dichtung, wobei die letztere im Kontakt mit der äußeren zylindrischen Seite des röhrenartigen Bereichs ist; und
- die zwei ebenen seitlichen Wände (13, 23, 33), welche die Rückenwand (11, 21, 31) und die Bauchwand (12, 22, 32) verbinden, im Kontakt sind mit jeweils der oberen Seite des Kragens bzw. der unteren Seite der Platte.

10. Verwendung nach Anspruch 9, wobei die den Bauch des D bildende Wand in der Kehle angeordnet ist, beabstandet von der inneren zylindrischen Seite der Mutter.

## Claims

1. Ring seal (10, 20, 30) made of elastically deformable material, having an axis of revolution (R) and a median transverse axis (T), and comprising, in cross section, a general D shape defined by a wall (11, 21, 31) forming the back of the D, a wall (12, 22, 32) facing it forming the belly of the D, and two side walls (13, 23, 33) connecting the back wall (11, 21, 31) and the belly wall (12, 22, 32), in which:
- the seal has a height (H), between the side walls and in projection on the axis of revolution (R), and a thickness (E) between the back wall (11, 21, 31) and belly wall (12, 22, 32), in projection on the transverse axis (T), the ratio (E/H) of the thickness (E) over the height (H) being between 0.7 and 0.85, preferably 0.8, **characterized in that**:
- the back wall (11, 21, 31) comprises, in the uncompressed state, a concave face defining a hollow (11a, 21a) between two crowns (14), the hollow having a height (h) of between 50% and 60% of the height (H) of the seal, and a depth (p) of between 4% and 8% of the thickness (E) of the seal.

2. Ring seal (10, 20, 30) according to Claim 1, in which each side wall (13, 23, 33) comprises, in the uncompressed state, a face that is flat and substantially parallel to the transverse axis (T), having a width (ℓ, ℓ₁, ℓₘᵢₙ, ℓₘₐₓ) of between 18% and 35% of the thickness (E) of the seal.

3. Ring seal (10, 20, 30) according to either one of Claims 1 and 2, in which the two crowns connecting the hollow to the flat faces (13, 23, 33) consist of rounded edges each having a radius of curvature of between 20% and 25% of the height (H) of the seal.

4. Ring seal (10, 20, 30) according to any one of Claims 1 to 3, in which the belly wall has at least one radius of curvature.

5. Seal according to any one of Claims 1 to 3, in which the concave face has at least one radius of curvature.

6. Seal according to Claims 2 and 4, in which the belly wall is connected to the flat side walls (33) by a flush join.

7. Seal according to Claims 2 and 4, in which the belly wall is connected to the flat side walls (33) by a radiated join.

8. Tank comprising a tank body (40) having a neck (41) having an axis of revolution (R), the neck being extended by a tubular region (42) with a smaller section than that of the neck, a plate (50) and a nut (60) designed to be screwed onto the neck (41) of the tank (40), an upper face (41a) of the neck, a lower face (50a) of the plate, an outer cylindrical face (42a) of the tubular region and an inner cylindrical face (60a) of the nut defining an annular groove for a seal, and a seal according to any one of Claims 1 to 7.

9. Use in a fuel tank comprising a tank body having a neck having an axis, the neck being extended by a tubular region, with a section smaller than that of the neck, a plate, and a nut screwed onto the neck of the tank, an upper face of the neck, a lower face of the plate, an outer cylindrical face of the tubular region and an inner cylindrical face of the nut defining an annular groove for a seal, of a seal according to any one of Claims 1 to 7, so that:
- the wall (11, 21, 31) forming the back of the D is supported by the inner face of the seal, the latter being in contact with the outer cylindrical face of the tubular region; and
- the two flat side walls (13, 23, 33) connecting the back wall (11, 21, 31) and the belly wall (12, 22, 32) are in contact with, respectively, the upper face of the neck and the lower face of the plate.

10. Use according to Claim 9, in which the wall forming the belly of the D is placed in the groove, at a distance from the inner cylindrical face of the nut.
